# EUROPEAN PATENT APPLICATION

(11) **EP 4 099 432 A1**
(43) Date of publication of application: **07.12.2022**
(21) Application number: 21883356.4
(22) Date of filing: 22.10.2021
(51) Int. Cl.: H01M 4/133, H01M 4/131, H01M 4/62, H01M 4/36, H01M 4/587, H01M 4/48, H01M 10/052

(54) **NEGATIVE ELECTRODE AND SECONDARY BATTERY COMPRISING SAME**

(30) Priority: 23.10.2020 KR 20200138049
(71) Applicant: LG Energy Solution, Ltd., Seoul 07335 (KR)
(72) Inventor: KIM, Min Kyung, Daejeon 34122 (KR); LEE, Jeong Min, Daejeon 34122 (KR); NOH, Hyung Jun, Daejeon 34122 (KR)
(74) Representative: Hoffmann Eitle
(86) International application number: PCT/KR2021/014963
(87) International publication number: WO 2022/086289

(57) **Abstract**

The present invention relates to a negative electrode including a negative electrode current collector, a first negative electrode active material layer disposed on the negative electrode current collector, and a second negative electrode active material layer disposed on the first negative electrode active material layer, wherein the second negative electrode active material layer includes a second negative electrode active material and a second conductive material, and the second negative electrode active material includes a silicon-based active material and a carbon-based active material, wherein the silicon-based active material includes SiOₓ (0≤X<2), and the second conductive material includes a carbon nanotube structure in which a plurality of single-walled carbon nanotube units are bonded side by side, and a particulate conductive material, wherein in the second negative electrode active material layer, the weight ratio of the carbon nanotube structure and the particulate conductive material is 12.7:87.3 to 0.5:99.5.

## Description

### TECHNICAL FIELD

### CROSS-REFERENCE TO RELATED APPLICATION

This application claims the benefit of Korean Patent Application No. 10-2020-0138049, filed on October 23, 2020, in the Korean Intellectual Property Office, the disclosure of which is incorporated herein in its entirety by reference.

### TECHNICAL FIELD

The present invention relates to a secondary battery including a negative electrode current collector, a first negative electrode active material layer disposed on the negative electrode current collector, and a second negative electrode active material layer disposed on the first negative electrode active material layer, wherein the second negative electrode active material layer includes a second negative electrode active material and a second conductive material, and the second negative electrode active material includes a silicon-based active material and a carbon-based active material, wherein the silicon-based active material includes SiOₓ (0≤X<2), wherein the second conductive material includes a carbon nanotube structure in which a plurality of single-walled carbon nanotube units are bonded side by side, and a particulate conductive material, wherein in the second negative electrode active material layer, the weight ratio of the carbon nanotube structure and the particulate conductive material is 12.7:87.3 to 0.5:99.5.

### BACKGROUND ART

As the technology development and demand for mobile devices have increased in recent years, the demand for secondary batteries as an energy source has been rapidly increased. Accordingly, various studies have been conducted on batteries which may meet various needs. Particularly, studies have been actively conducted on a lithium secondary battery having high energy density and excellent lifespan and cycle properties as a power source for such devices.

A lithium secondary battery refers to a battery in which a non-aqueous electrolyte containing lithium ions is included in a **battery** assembly including a positive electrode containing a positive electrode active material capable of intercalation/deintercalation of lithium ions, a negative electrode containing a negative electrode active material capable of intercalation/deintercalation of lithium ions, and a microporous separator interposed between the positive electrode and the negative electrode.

Meanwhile, since the negative electrode active material alone cannot secure the conductivity of the negative electrode, there is a problem in that the resistance of a battery is too high, and thus, commonly, the negative electrode additionally includes a conductive material. Typically, a particulate conductive material such as carbon black is mainly used, and in order to further improve conductivity, thereby improving the capacity of a battery, a linear conductive material, such as carbon nanotubes and carbon nanofibers, is also used.

A single-walled carbon nanotube is one example of the linear conductive material, which improves the conductivity in a negative electrode active material layer due to the elongated shape thereof. Therefore, typically, a negative electrode slurry is prepared through a dispersion solution obtained by completely dispersing the single-walled carbon nanotube, and then a negative electrode active material layer is prepared through the negative electrode slurry.

However, when a battery is repeatedly charged and discharged, the single-walled carbon nanotube is disconnected due to the repeated volume expansion/contraction of a negative electrode active material, so that there is a problem in that it is difficult to maintain a conductive network in the negative electrode active material layer. Particularly, when a silicon-based active material is used as the negative electrode active material in order to improve the capacity of the battery, the volume of the silicon-based active material is excessively increased due to the charging/discharging of the battery, so that the phenomenon in which the single-walled carbon nanotube is disconnected occurs more severely. Accordingly, the conductive network is blocked or reduced, which deteriorates the lifespan properties of the battery. In addition, the single-walled carbon nanotube is present surrounding the surface of the silicon-based active material, and thus, cannot smoothly play the role of conductively connecting adjacent negative electrode active materials to each other.

In addition, unlike a particulate conductive material, when the single-walled carbon nanotube is mixed with a negative electrode active material and the like, an edge of the disconnected single-walled carbon nanotube is exposed, so that there is a problem in that side reactions with an electrolyte solution increases since the reactivity of the single-walled carbon nanotube increases compared to that of the particulate conductive material.

Meanwhile, when carbon nanotubes are used as a conductive material, a carbon nanotube dispersion solution low in solids should be used to uniformly dispose the carbon nanotubes in a negative electrode active material layer. However, when carbon nanotubes low in solids are used, at the time of drying a negative electrode, a phenomenon (migration) in which a binder and a conductive material, which are relatively low in density compared to a negative electrode active material, are easily moved to an upper layer portion (in a direction away from a current collector) of a negative electrode active material layer occurs, so that there is a problem in that negative electrode adhesion force and electrical conductivity are significantly degraded.

Therefore, the present invention introduced a negative electrode in which a conductive network may be connected even with a large volume change of a negative electrode active material, and the problem caused by the migration of a binder may be minimized.

### DISCLOSURE OF THE INVENTION

### TECHNICAL PROBLEM

An aspect of the present invention provides a negative electrode capable of improving input/output properties and lifespan properties of a battery by reducing a problem caused by the migration phenomenon of a binder while smoothly maintaining a conductive network.

Another aspect of the present invention provides a secondary battery including the negative electrode.

### TECHNICAL SOLUTION

According to an aspect of the present invention, there is provided a negative electrode including a negative electrode current collector, a first negative electrode active material layer disposed on the negative electrode current collector, and a second negative electrode active material layer disposed on the first negative electrode active material layer, wherein the second negative electrode active material layer includes a second negative electrode active material and a second conductive material, and the second negative electrode active material includes a silicon-based active material and a carbon-based active material, wherein the silicon-based active material includes SiOₓ (0≤X<2), and the second conductive material includes a carbon nanotube structure in which a plurality of single-walled carbon nanotube units are bonded side by side, and a particulate conductive material, wherein in the second negative electrode active material layer, the weight ratio of the carbon nanotube structure and the particulate conductive material is 12.7:87.3 to 0.5:99.5.

According to another aspect of the present invention, there is provided a secondary battery including the negative electrode.

### ADVANTAGEOUS EFFECTS

In a negative electrode according to the present invention, a second negative electrode active material layer includes a carbon nanotube structure in the shape of a long rope in which a plurality of single-walled carbon nanotube units are coupled side by side, so that the carbon nanotube structure may connect second negative electrode active materials despite a large volume change of SiOₓ (0≤X<2) of the second negative electrode active material layer, thereby improving the lifespan properties of a battery. In addition, the second negative electrode active material layer includes the carbon nanotube structure and a particulate conductive material at an appropriate weight ratio, so that a conductive network of the second negative electrode active material layer may be more effectively formed. In addition, the negative electrode includes a first negative electrode active material layer and a second negative electrode active material layer which are sequentially disposed using respective slurries, so that the above-described migration phenomenon of a binder and a conductive material may be minimized. Furthermore, the second negative electrode active material layer includes a carbon nanotube structure, so that the adhesion force of the first negative electrode active material layer and the second negative electrode active material layer may be enhanced. Accordingly, the input/output properties, and lifespan properties of the battery may be improved.

### BRIEF DESCRIPTION OF THE DRAWINGS

FIG. 1 is an SEM photograph of a cross-section of a negative electrode according to embodiment of the present invention.
FIG. 2 is an SEM photograph of a negative electrode according to Example 1.
FIG. 3 is an SEM photograph of a negative electrode according to Comparative Example 1.
FIG. 4 is an adhesion force evaluation graph of negative electrodes of Example 1, Comparative Example 1, and Comparative Example 2.
FIG. 5 is a photograph showing the results of an adhesion force test for the negative electrode of Example 1.
FIG. 6 is a photograph showing the results of an adhesion force test for the negative electrode of Comparative Example 1.
FIG. 7 is a resistance evaluation graph of the negative electrodes of Example 1 and Comparative Example 1.
FIG. 8 is a battery resistance evaluation graph of batteries respectively using the negative electrode of Example 1, the negative electrode of Comparative Example 1, and the negative electrode of Comparative Example 2.
FIG. 9 is a battery resistance evaluation graph of batteries respectively using the negative electrode of Example 1 and the negative electrode of Comparative Example 3.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, "%" means wt% unless otherwise noted.

In the present specification, a "specific surface area" is measured by a BET method, and specifically, may be calculated from the adsorption amount of nitrogen gas under a liquid nitrogen temperature (77K) using Belsorp-mini II of BEL Japan Co., Ltd.

In the present specification, an average particle diameter (D₅₀) may be defined as a particle diameter corresponding to 50% of the volume accumulation in a particle diameter distribution curve of a particle. The average particle diameter (D₅₀) may be measured by, for example, a laser diffraction method. The laser diffraction method generally enables measurement of a particle diameter from a sub-micron region to several millimeters, so that results of high reproducibility and high resolution may be obtained.

In the present invention, a single-walled carbon nanotube unit refers to a unit in the form of a tube having one wall composed of carbon atoms, and a multi-walled carbon nanotube unit refers to a unit in the form of a tube having multiple layers of walls composed of carbon atoms in one tube.

Hereinafter, the present invention will be described in detail.

### Negative electrode

A negative electrode according to the present invention includes a negative electrode current collector, a first negative electrode active material layer disposed on the negative electrode current collector, and a second negative electrode active material layer disposed on the first negative electrode active material layer, wherein the second negative electrode active material layer includes a second negative electrode active material and a second conductive material, and the second negative electrode active material includes a silicon-based active material and a carbon-based active material, wherein the silicon-based active material includes SiOₓ (0≤X<2), and the second conductive material includes a carbon nanotube structure in which a plurality of single-walled carbon nanotube units are coupled side by side, and a particulate conductive material, wherein in the second negative electrode active material layer, the weight ratio of the carbon nanotube structure and the particulate conductive material may be 12.7:87.3 to 0.5:99.5.

The negative electrode current collector is not particularly limited as long as it has conductivity without causing a chemical change in the battery. For example, as the negative electrode current collector, copper, stainless steel, aluminum, nickel, titanium, fired carbon, or aluminum or stainless steel that is surface-treated with one of carbon, nickel, titanium, silver, and the like may be used. Specifically, a transition metal which adsorbs carbon such as copper and nickel well may be used as the negative electrode current collector.

The negative electrode may include a negative electrode active material layer. The negative electrode active material layer may be disposed on one surface or both surfaces of the negative electrode current collector.

The negative electrode active material layer may include a first negative electrode active material layer and a second negative electrode active material layer. The first negative electrode active material layer may be disposed on the negative electrode current collector, and specifically, may be in contact with the negative electrode current collector. The second negative electrode active material layer may be disposed on the first negative electrode active material layer, and the first negative electrode active material layer may be disposed between the second negative electrode active material layer and the negative electrode current collector.

In general, when carbon nanotubes are used as a conductive material, a carbon nanotube dispersion solution low in solids should be used to uniformly dispose the carbon nanotubes in a negative electrode active material layer. However, when carbon nanotubes low in solids are used, at the time of drying a negative electrode slurry, a phenomenon (migration) in which a binder and a conductive material, which are relatively low in density compared to a negative electrode active material, are easily drawn to an upper layer portion (a portion away from a negative electrode current collector and closer to a surface) of a negative electrode active material layer occurs, so that there is a problem in that negative electrode adhesion force and electrical conductivity are significantly degraded. However, the negative electrode of the present invention includes a first negative electrode active material layer and a second negative electrode active material layer which are sequentially disposed using respective slurries, so that the above-described migration phenomenon of a binder and a conductive material may be minimized. Accordingly, the input/output properties and lifespan properties of the battery may be improved.

### (1) First negative electrode active material layer

The first negative electrode active material layer may include a first negative electrode active material.

The first negative electrode active material may be a negative electrode active material commonly used in the art, and the type thereof is not particularly limited.

Specifically, the first negative electrode active material may include a carbon-based active material, and as particles of the carbon-based active material, one or more selected from the group consisting of artificial graphite, natural graphite, a graphitized carbon fiber, and a graphitized mesocarbon microbead may be used. Particularly, when artificial graphite is used, it is possible to improve rate properties.

The first negative electrode active material may be included in the first negative electrode active material layer in an amount of 70 wt% to 99.5 wt%, preferably 80 wt% to 99 wt%. When the content of the first negative electrode active material satisfies the above range, the energy density of the negative electrode may be improved, the adhesion force of the negative electrode may be improved, and the electrical conductivity in the negative electrode may be improved.

The first negative electrode active material may not include a silicon-based active material. Specifically, the first negative electrode active material may only be composed of a carbon-based negative electrode active material. Accordingly, since it is possible to prevent the adhesion force of the negative electrode current collector and the first negative electrode active material from being weakened due to the volume expansion of a silicon-based active material, the lifespan properties of the battery may be improved.

The first negative electrode active material layer may further include a first conductive material.

The first conductive material may include at least any one selected from the group consisting of a carbon nanotube structure, a multi-walled carbon nanotube unit, graphene, and carbon black. The carbon nanotube structure will be described in detail later.

The first conductive material may be included in the first negative electrode active material layer in an amount of 0.01 wt% to 2.0 wt%, specifically 0.01 wt% to 1.5 wt%, more specifically 0.05 wt% to 1.0 wt%. When the above range is satisfied, the adhesion force and electrical conductivity of the negative electrode may be greatly improved only with the application of a small content of the first conductive material, and the battery having excellent input/output properties and lifespan properties of a battery may be obtained.

The thickness of the first negative electrode active material layer may be 1 µm to 100 µm, specifically 5 pm to 90 µm, more specifically 10 µm to 80 µm. When the above range is satisfied, the above-mentioned migration phenomenon of a conductive material and a binder may be minimized. Accordingly, the adhesion force and electrical conductivity of the negative electrode may be greatly improved, and the input/output properties and lifespan properties of the battery may be improved.

### (2) Second negative electrode active material layer

The second negative electrode active material layer may include a second negative electrode active material and a second conductive material.

The second negative electrode active material may include a silicon-based active material and a carbon-based active material.

The silicon-based active material may include SiOₓ (0≤x<2). The SiOₓ (0≤x<2) may specifically be SiO. Since the second negative electrode active material includes SiOₓ (0≤x<2), the capacity of the battery may be improved. Particularly, since the second negative electrode active material layer, not the first negative electrode active material layer, includes SiOₓ (0≤x<2), the durability of the negative electrode may be improved, and electrolyte solution impregnation properties may be improved. More specifically, at a boundary surface between the negative electrode current collector and the negative electrode active material layer where the binding force is the weakest in the negative electrode, there is a problem in that the negative electrode active material is easily deintercalated from the negative electrode due to the contraction and expansion of the negative electrode active material during charging and discharging of the battery, and the de-intercalation phenomenon is accelerated when SiOₓ (0≤X<2) is positioned close to the negative electrode current collector. Accordingly, the durability of the negative electrode is degraded, and the capacity and lifespan properties of the battery are deteriorated.

Meanwhile, during roll-pressing in a negative electrode manufacturing process, the density near a surface of the negative electrode is excessively increased, and thus, the electrolyte solution impregnation properties are degraded. When SiOₓ (0≤X<2) is positioned close to the surface of the negative electrode, the density of the negative electrode may be decreased to an appropriate level and the electrolyte solution impregnation properties may be improved due to the volume expansion of SiOₓ (0≤X<2) during an initial charging of the battery.

The silicon-based active material may further include a carbon coating layer formed on SiOₓ (0≤X<2). The carbon coating layer may be disposed on the SiOₓ (0≤x<2). The carbon coating layer serves to improve conductivity of the SiOₓ (0≤X<2), and to suppress excessive volume expansion of the SiOₓ (0≤X<2).

The carbon coating layer may include at least any one of amorphous carbon and crystalline carbon.

The crystalline carbon may further improve the conductivity of the negative electrode active material. The crystalline carbon may include at least any one selected from the group consisting of fluorene, a carbon nanotube, and graphene.

The amorphous carbon may appropriately maintain the strength of the coating layer, thereby suppressing the expansion of the natural graphite. The amorphous carbon may be at least any one carbide selected from the group consisting of tar, pitch, and other organic materials, or a carbon-based material formed by using hydrocarbon as a source of chemical vapor deposition.

The carbide of the other organic materials may be a carbide of an organic material selected from the group consisting of sucrose, glucose, galactose, fructose, lactose, mannose, ribose, aldohexose or ketohexose carbides and combinations thereof.

The hydrocarbon may be substituted or unsubstituted aliphatic or alicyclic hydrocarbon, or substituted or unsubstituted aromatic hydrocarbon. Aliphatic or alicyclic hydrocarbon of the substituted or unsubstituted aliphatic or alicyclic hydrocarbon may be methane, ethane, ethylene, acetylene, propane, butane, butene, pentene, isobutene or hexane, and the like. Aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, or phenanthrene, and the like.

The average particle diameter (D₅₀) of the silicon-based active material may be 0.1 µm to 20 µm, specifically 1 µm to 10 µm. When the above range is satisfied, side reactions between the SiOₓ (0≤X<2) and an electrolyte solution may be suppressed, a reaction in which lithium silicates are formed from the SiOₓ (0≤X<2) may be controlled to prevent the degradation in initial efficiency, and an initial capacity of the battery may be maximized.

The carbon-based active material may include at least any one selected from the group consisting of artificial graphite, natural graphite, and graphitized mesocarbon microbead. Specifically, in terms of being capable of effectively controlling the volume expansion of the negative electrode while maintaining an electrical network together with a carbon nanotube structure to be described later, the carbon-based active material is preferably artificial graphite, but is not limited thereto.

The weight ratio of the silicon-based active material and the carbon-based active material may be 0.5:99.5 to 20:80, specifically 1:99 to 12:88. When the above range is satisfied, the excessive volume expansion of the second negative electrode active material may be suppressed, and the capacity of the battery may be improved.

The second negative electrode active material may be included in the second negative electrode active material layer in an amount of 90 wt% to 99 wt%, specifically 95 wt% to 99 wt%. When the above range is satisfied, the energy density of the negative may be maintained high, and the conductivity of the negative electrode and the adhesion force of the negative electrode may be improved.

The second conductive material may include a carbon nanotube structure and a particulate conductive material.

The carbon nanotube structure may include a plurality of single-walled carbon nanotube units. Specifically, the carbon nanotube structure may be a carbon nanotube structure in which 2 to 5,000 single-walled carbon nanotube units are coupled to each other side by side. More specifically, in consideration of the durability and conductive network of the second negative electrode active material layer, the carbon nanotube structure may be a carbon nanotube structure in which 2 to 4,500, preferably 2 to 4,000, more preferably 2 to 200 single-walled carbon nanotube units are coupled to each other. When considering the improvement of the dispersibility of the carbon nanotube structure and the durability of the negative electrode, the carbon nanotube structure may be formed of 2 to 50 single-walled carbon nanotube units arranged and coupled to each other side by side.

In the carbon nanotube structure, the single-walled carbon nanotube units may be arranged and coupled side by side (a cylindrical structure in the form of a bundle in which long axes of the units are coupled parallel to each other, thereby having flexibility) to form the carbon nanotube structure. In the second negative electrode active material layer, the carbon nanotube structures may be connected to each other to represent a network structure.

Typical electrodes including carbon nanotubes are generally manufactured by dispersing a bundle-type or entangled-type carbon nanotube (a form in which single-walled carbon nanotube units or multi-walled carbon nanotube units are attached to or entangled with each other) in a dispersion medium to prepare a conductive material dispersion solution, and then using the conductive material dispersion solution. At this time, the carbon nanotube is completely dispersed in a typical conductive material dispersion solution, and is present as a conductive material dispersion solution in which carbon nanotube units in the form of a single strand are dispersed. In the typical conductive material dispersion, the carbon nanotube units are easily cut due to an excessive dispersion process, and thus, becomes shorter than in the beginning. In addition, the carbon nanotube units may be easily cut during a roll-pressing process of a negative electrode as well, and there is an additional problem in that the carbon nanotube units (particularly, single-walled carbon nanotube units) are cut due to an excessive volume change of a silicon electrode active material when a battery is driven. Accordingly, the conductivity of the negative electrode is degraded, so that there is a problem in that the lifespan properties of the battery are degraded. Furthermore, multi-walled carbon nanotube units are highly defective in structure due to a node growing mechanism (rather than being smoothly linear, there are nodes generated by defects occurring during a growth process). Accordingly, during a dispersion process, the multi-walled carbon nanotube units are more easily cut, and the multi-walled carbon nanotube units cut short are likely to aggregate with each other by π-π stacking caused by carbon of the unit. Accordingly, it is even more difficult for the units to be uniformly dispersed and present in a negative electrode slurry.

On the other hand, the carbon nanotube structure included in the second negative electrode active material layer of the present invention has a rope form in which a plurality of single-walled carbon nanotube units maintaining high crystallinity while having relatively no structural defects are arranged side by side and coupled to each other, and thus, maintains its length without being cut despite the volume change of the second negative electrode active material, so that the conductivity of the negative electrode may be maintained even during a continuous charging and discharging process of the battery. In addition, due to high electrical conductivity of the single-walled carbon nanotube units having high crystallinity, the conductivity of the negative electrode may be increased to reduce negative electrode resistance, and the input/ output properties and lifespan properties of the battery may be greatly improved. In addition, since the carbon nanotube structures may be connected to each other to have a network structure in the second negative electrode active material layer directly subjected to pressure during roll-pressing, damage to the second negative electrode active material (for example, breakage phenomenon such as cracks) may be suppressed. In addition, even when there is a crack in the second negative electrode active material, the carbon nanotube structure connects the second negative electrode active material across the crack, so that a conductive network may be maintained. Furthermore, since the carbon nanotube structure may maintain a long shape without being easily disconnected, the conductive network may be enhanced throughout the second negative electrode active material layer. In addition, the de-intercalation of the second negative electrode active material is suppressed, so that the adhesion force of the negative electrode may be greatly improved.

In addition, since the carbon nanotube structure is included in the second negative electrode active material layer, the adhesion between the first negative electrode active material layer and the second negative electrode active material layer may be greatly improved. Due to a long rope shape formed by a horizontal coupling of single-walled carbon nanotube units inside the carbon nanotube structure, the carbon nanotube structure may well connect second negative electrode active materials to each other through van der Waals force and may firmly configure the negative electrode. In addition, since the carbon nanotube structure and the surface of the carbon-based active material of the first negative electrode active material layer may be more tightly coupled by π-π bonding (stacking) occurring between homogeneous carbons, the adhesion between the first negative electrode active material layer and the second negative electrode active material layer may be further enhanced.

In the carbon nanotube structure, the average diameter of the single-walled carbon nanotube units may be 0.1 nm to 10 nm, specifically 1 nm to 9 nm. When the above average diameter is satisfied, there is an effect of maximizing the conductivity in the negative electrode even with a minimal amount of a conductive material. The average diameter corresponds to an average value of diameters of top 100 single-walled carbon nanotube units having a larger diameter and diameters of bottom 100 single-walled carbon nanotube units having a smaller diameter when a manufactured negative electrode is observed through a TEM.

In the carbon nanotube structure, the average length of the single-walled carbon nanotube units may be 1 pm to 100 µm, specifically 5 µm to 50 µm. When the above average length is satisfied, a long conductive path for conductive connection between the second negative electrode active materials may be formed and a unique network structure may be formed, so that there is an effect of maximizing the conductivity in the negative electrode even with a minimal amount of a conductive material. The average length corresponds to an average value of lengths of top 100 single-walled carbon nanotube units having a larger length and lengths of bottom 100 single-walled carbon nanotube units having a smaller length when a manufactured negative electrode is observed through a TEM.

The specific surface area of the single-walled carbon nanotube unit may be 500 m²/g to 1,000 m²/g, specifically 600 m²/g to 800 m²/g. When the above range is satisfied, a conductive path may be smoothly secured in the negative electrode due to a large specific surface area, so that there is an effect of maximizing the conductivity in the negative electrode even with a minimal amount of a conductive material. The specific surface area of the single-walled carbon nanotube unit may be calculated from an adsorption amount of nitrogen gas at a liquid nitrogen temperature (77 K) using Belsorp-mino II of BEL Japan Co., Ltd.

The average diameter of the carbon nanotube structures may be 2 nm to 500 nm, specifically 5 nm to 200 nm, more specifically 5 nm to 50 nm. When the above range is satisfied, it is effective in forming a conductive network structure, and it is advantageous in connecting between the second negative electrode active materials, so that excellent electrical conductivity may be implemented. The average diameter corresponds to an average value of diameters of top 100 carbon nanotube structures having a larger diameter and diameters of bottom 100 carbon nanotube structures having a smaller diameter when a manufactured negative electrode is observed through a TEM.

The average length of the carbon nanotube structure may be 3 µm to 15 µm, specifically 4 µm to 13 µm, more specifically 5 µm to 10 µm. When the above range is satisfied, it is effective in forming a conductive network structure, and it is advantageous in connecting between the second negative electrode active materials, so that excellent electrical conductivity may be implemented. The average length corresponds to an average value of lengths of top 100 carbon nanotube structures having a larger length and lengths of bottom 100 carbon nanotube structures having a smaller length when a manufactured negative electrode is observed through a SEM.

The carbon nanotube structure may be included in the second negative electrode active material layer in an amount of 0.005 wt% to 0.07 wt%, specifically 0.005 wt% to 0.05 wt%, more specifically 0.01 wt% to 0.03 wt%. When the above range is satisfied, a conductive path of the second negative electrode active material layer is secured, so that the lifespan properties of the battery may be improved while maintaining a low level of negative electrode resistance. When preparing a conductive material dispersion solution, in the case of completely dispersing a bundle-type carbon nanotube (dispersing carbon nanotube units of a single strand to be separated from each other as much as possible by a common dispersion method), the carbon nanotube structure is not generated, or generated in a minimal amount (for example, 0.0005 wt%) if generated by accident. That is, it is impossible to achieve the above content range by a common method. The carbon nanotube structure has a form in which 2 to 5,000 single-walled carbon nanotube units are arranged side by side and coupled to each other, so that the carbon nanotube structure may smoothly maintains its length without being cut despite the volume change of the second negative electrode active material. Accordingly, a conductive network of the second negative electrode active material layer may be maintained, and due to high conductivity of the carbon nanotube unit, the conductivity of the second negative electrode may be smoothly secured. Accordingly, even when the content of carbon nanotube structure in the second negative electrode active material layer is low, the input/output properties and lifespan properties of the battery may be excellent.

Meanwhile, in some cases, the single-walled carbon nanotube unit may be surface-treated through oxidation treatment or nitration treatment to improve affinity with a dispersant agent.

The particulate conductive material serves as a hub for the conductive network in the second negative electrode active material layer. Specifically, when the particulate conductive material is included together with the carbon nanotube structure in the second negative electrode active material layer, the particulate conductive material serves as a hub, and the carbon nanotube structure forms a long conductive path, so that the conductivity in the second negative electrode active material layer may be effectively improved. Accordingly, the conductive network of vertical and horizontal directions in the second negative electrode active material layer is improved, and the resistance of the second negative electrode active material layer is reduced, so that fast charging performance of the battery may be improved.

The particulate conductive material may include carbon black, and specifically, the particulate conductive material may be carbon black. The carbon black has high dispersibility and conductivity, and thus, is advantageous for use in combination with a carbon nanotube structure. The carbon black may be at least any one selected from the group consisting of acetylene black, Ketjen black, channel black, and furnace black, but is not limited thereto.

The average particle diameter (D₅₀) of the particulate conductive material may be 0.1 µm to 100 µm, specifically 0.1 µm to 5 µm. When the above range is satisfied, the energy density of the battery may be improved.

In the second negative electrode active material layer, the weight ratio of the carbon nanotube structure and the particulate conductive material may be 12.7:87.3 to 0.5:99.5, specifically 9:91 to 0.5:99.5, more specifically 5:95 to 0.5:99.5. When the content of the particulate conductive material is out of the above range (12.7:87.3 to 0.5:99.5) and less than the above range, it is difficult to impart sufficient conductivity to the carbon-based active material of the second negative electrode active material layer, and the conductive network is easily disconnected due to the excessive volume expansion of the silicon-based active material, so that there is a problem in that the long-term durability and the fast charge performance of the negative electrode are degraded. On the contrary, when the content of the particulate conductive material is out of the above range (12.7:87.3 to 0.5:99.5) and greater than the above range, the conductive network of the second negative electrode active material layer is not sufficiently formed, and the viscosity of the negative electrode is excessively increased, so that the mixing of a negative electrode slurry and the processibility of coating are deteriorated.

Meanwhile, more specifically, referring to the weight ratio of 9:91 to 0.5:99.5 or 5:95 to 0.5:99.5, it can be seen that the content of the carbon nanotube structure is extremely low. Since the carbon nanotube structure is used instead of using a common multi-walled carbon nanotube or a single-walled carbon nanotube unit present in a single strand form, it is possible to form an effective conductive network even with a small amount of the carbon nanotube structure.

The thickness of the second negative electrode active material layer may be 1 µm to 100 µm, specifically 5 µm to 90 µm, more specifically 10 µm to 80 µm. When the above range is satisfied, the above-mentioned migration phenomenon of a conductive material and a binder may be minimized. Accordingly, the adhesion force of the negative electrode (adhesion between the negative electrode active material layer and the current collector), the adhesion between the first negative electrode active material layer and the second negative electrode active material layer, and the electrical conductivity of the negative electrode are greatly improved, and the input/output properties and lifespan properties of the battery may be improved.

It is preferable that the thickness of the second negative electrode active material layer is greater than or equal to than the thickness of the first negative electrode active material layer. The ratio of the thickness of the first negative electrode active material layer and the thickness of the second negative electrode active material layer may be 1:1 to 1:2, specifically 1:1 to 1:1.5. When the above range is satisfied, the effect of suppressing the above-mentioned migration phenomenon of a conductive material and a binder is reduced, and the effect of improving diffusion resistance through the improvement of the porosity of the second negative electrode active material layer is reduced. When the thickness of the first negative electrode active material layer is outside the above range and excessively small, the effect of suppressing the above-mentioned migration phenomenon of a conductive material and a binder is also reduced, so that the effect of improving negative electrode adhesion force and improving interfacial resistance is insignificant.

There is a boundary surface between the first negative electrode active material layer and the second negative electrode active material layer. This can be confirmed through a cross-section of a manufactured negative electrode. On the contrary, if the negative electrode active material layer is formed in a single-layered structure (application is performed only once through one negative electrode slurry) rather than a multi-layered structure, the boundary surface is not observed.

Each of the first negative electrode active material layer and the second negative electrode active material layer may further include a binder, and the binder of the first negative electrode active material layer and the binder of the second negative electrode active material layer may be the same or different. The binder is to ensure the adhesion between the negative electrode active materials or between the negative electrode active material and the current collector. Any binder commonly used in the art may be used, and the type thereof is not particularly limited. The binder may be, for example, a vinylidene fluoride-hexafluoropropylene copolymer(PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, carboxymethyl cellulose (CMC), styrene-butadiene rubber (SBR), fluorine rubber, or various copolymers thereof, and the like, and any one thereof or a mixture of two or more thereof may be used.

The binder may be included in an amount of 10 wt% or less, preferably 0.1 wt% to 5 wt% in the first negative electrode active material layer (or the second negative electrode active material layer). When the content of the binder satisfies the above range, it is possible to implement excellent negative electrode adhesion force while minimizing an increase in negative electrode resistance.

### Method for manufacturing negative electrode

Next, a method for manufacturing a negative electrode of the present invention will be described.

The method for manufacturing a negative electrode of the present invention includes preparing a first negative electrode slurry and a second negative electrode slurry, and forming a first negative electrode active material layer on a negative electrode current collector through the first negative electrode slurry and forming a second negative electrode active material layer on the first negative electrode actively material layer through the second negative electrode slurry, wherein the second negative electrode slurry includes a second negative electrode actively material and a second conductive material, and the second negative electrode active material includes a silicon-based active material and a carbon-based active material, wherein the silicon-based active material includes SiOₓ (0≤X<2), and the second conductive material includes a carbon nanotube structure in which a plurality of single-walled carbon nanotube units are coupled side by side, and a particulate conductive material, wherein in the second negative electrode active material layer, the weight ratio of the carbon nanotube structure and the particulate conductive material may be 12.7:87.3 to 0.5:99.5. The first negative electrode active material layer, the second negative electrode active material layer, the second negative electrode active material, the second conductive material, the carbon nanotube structure, the particulate conductive material are the same as those of the embodiment described above.

### (1) Preparing first negative electrode slurry and second negative electrode slurry

A method for preparing the first negative electrode slurry may be the same as a common method for preparing a negative electrode slurry. For example, the first negative electrode slurry is prepared by preparing a mixture including a first negative electrode active material (same as the first negative electrode active material of the above-described embodiment), a first conductive material (same as the first conductive material of the above-described embodiment) and a solvent (a binder may be further included), and then stirring the mixture.

However, when the first negative electrode slurry includes a carbon nanotube structure, a carbon nanotube structure dispersion solution to be described later should be prepared.

The solvent may be, for example, an amide-based polar organic solvent such as water, dimethylformamide (DMF), diethylformamide, dimethylacetamide (DMAc), and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; a glycol such as ethylene glycol, diethylene glycol, triethylene glycol, propylene glycol, 1,3-propanediol, 1,3-butanediol, 1,5-pentanediol, and hexylene glycol; a polyhydric alcohol such as glycerin, trimethylol propane, pentaerythritol, and sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; a ketone such acetone, methyl ethyl ketone, methyl propyl ketone, and cyclopentanone; and an ester such as ethyl acetate, γ-butyl lactone, and ε-propiactone. Any one thereof and a mixture of two or more thereof may be used, but the solvent is not limited thereto. The solvent may be the same as or different from a dispersion medium used in the conductive material dispersion solution, and may preferably be water.

The second negative electrode slurry may be prepared by preparing a mixture which includes a second negative electrode active material, a carbon nanotube structure dispersion solution, a particulate conductive material, and a solvent, and then stirring the mixture.

The carbon nanotube structure dispersion solution may be prepared as follows.

The preparing of the carbon nanotube structure dispersion solution may include a step S1-1 of preparing a mixed solution including a dispersion medium, a dispersion agent, and a bundle-type single-walled carbon nanotube (a combination or agglomerate of single-walled carbon nanotube units), and a step S1-2 of applying shear force to the mixed solution to disperse the bundle-type single-walled carbon nanotube to form a carbon nanotube structure in which a plurality of single-walled carbon nanotube units are coupled side by side.

In the step S1-1, the mixed solution may be prepared by introducing a bundle-type single-walled carbon nanotube and a dispersion agent into a dispersion medium. The bundle-type single-walled carbon nanotube is one in which the above-described single-walled carbon nanotube units are coupled and present in a bundle form, and usually includes two or more, substantially 500 or more, for example 5,000 or more of single-walled carbon nanotube units.

The specific surface area of the bundle-type single-walled carbon nanotube may be 500 m²/g to 1,200 m²/g, specifically 550 m²/g to 1,200 m²/g. When the above range is satisfied, a conductive path may be smoothly secured in the second negative electrode active material layer due a large specific surface area, so that there is an effect of maximizing the conductivity in the second negative electrode active material layer even with a minimal amount of a conductive material. In addition, in order to reinforce the adhesion between the first negative electrode active material layer and the second negative electrode active material layer, the specific surface area of the bundle-type single-walled carbon nanotube may preferably be 600 m²/g to 1,200 m²/g.

The bundle-type single-walled carbon nanotube may be included in the mixed solution in an amount of 0.1 wt% to 1.0 wt%, specifically 0.2 wt% to 0.5 wt%. When the above range is satisfied, the bundle-type single-walled carbon nanotube is dispersed to a suitable level, so that a carbon nanotube structure of an appropriate level may be formed, and dispersion stability may be improved.

The dispersion medium may be, for example, an amide-based polar organic solvent such as water, dimethylformamide (DMF), diethylformamide, dimethylacetamide (DMAc), and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; a glycol such as ethylene glycol, diethylene glycol, triethylene glycol, propylene glycol, 1,3-propanediol, 1,3-butanediol, 1,5-pentanediol, and hexylene glycol; a polyhydric alcohol such as glycerin, trimethylol propane, pentaerythritol, and sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; a ketone such acetone, methyl ethyl ketone, methyl propyl ketone, and cyclopentanone; and an ester such as ethyl acetate, γ-butyl lactone, and ε-propiactone. Any one thereof and a mixture of two or more thereof may be used, but the dispersion medium is not limited thereto. More specifically, the dispersion medium may be the same as or different from the solvent for preparing a negative electrode slurry, and may preferably be water.

The dispersant agent may include at least any one among hydrogenated nitrile butadiene rubber, polyvinylidene fluoride, polystyrene, polyvinylpyrrolidone, polyvinyl alcohol, pyrene butyric acid, pyrene sulfonic acid, tannic acid, pyrene methylamine, sodium dodecylsulfate, and carboxy methyl cellulose, and may specifically be carboxy methyl cellulose, polyvinylidene fluoride, polyvinylpyrrolidone, or hydrogenated nitrile butadiene rubber.

In the carbon nanotube structure dispersion solution, the weight ratio of the bundle-type carbon nanotube and the dispersion agent may be 1:0.1 to 1:10, specifically 1:1 to 1:10. When the above range is satisfied, the bundle-type single-walled carbon nanotube is dispersed to a suitable level, so that a carbon nanotube structure of an appropriate level may be formed, and dispersion stability may be improved.

The solid content in the mixed solution may be 0.1 wt% to 20 wt%, specifically 1 wt% to 10 wt%. When the above range is satisfied, the bundle-type single-walled carbon nanotube is dispersed to a suitable level, so that a carbon nanotube structure of an appropriate level may be formed, and dispersion stability may be improved. In addition, when the above range is satisfied, the second negative electrode slurry (a slurry for preparing the second negative electrode active material layer) may have viscosity and elasticity suitable for forming the second negative electrode active material layer, and the solid content of the second negative electrode slurry may be increased.

In the step S1-2, a process of dispersing the bundle-type carbon nanotube in the mixed solution may be performed using a mixing device such as a homogenizer, an in-line mixer, a beads mill, a ball mill, a basket mill, an attrition mill, an all-purpose stirrer, a clear mixer, a spike mill, a TK mixer, or sonification equipment.

Specifically, the step S1-2 may primarily disperse the mixed solution through an in-line mixer, and then secondarily disperse the primarily-dispersed mixed solution through a homogenizer.

The homogenizer may be a high pressure homogenizer including a primary nozzle and a secondary nozzle. When pressure is applied to the mixed solution, the mixed solution sequentially passes through the primary nozzle and the secondary nozzle. Since the diameter of the secondary nozzle is smaller than the diameter of the primary nozzle, the mixed solution is subjected to shear force while passing through the nozzles, at which time the bundle-type single-walled carbon nanotube is dispersed.

The diameter of the primary nozzle may be 100 mm to 500 mm, specifically 150 mm to 300 mm, more specifically 150 nm to 250 mm. The diameter of the secondary nozzle may be 100 µm to 1000 µm, specifically 200 µm to 800 µm, more specifically 200 µm to 650 µm. In addition, the pressure may be 500 Bar to 1800 Bar, specifically 5000 Bar to 1600 Bar, more specifically 800 Bar to 1600 Bar. When the pressure is greater than 1800 Bar, the bundle-type single-walled carbon nanotube is completely dispersed, so that a carbon nanotube structure may not be smoothly formed.

Unlike a typical method of completely dispersing a bundle-type single-walled carbon nanotube, conditions of applying a homogenizer (nozzle size, pressure, etc.), physical properties of a bundle-type single-walled carbon nanotube to be used, conditions of a dispersant agent used and the like are suitably combined to disperse the bundle-type single-walled carbon nanotube at an appropriate level without completely dispersing the same. Accordingly, in a formed conductive material dispersion solution, there may be mostly the carbon nanotube structure described above without any or almost any single-walled carbon nanotube unit independently present in a single strand form.

The negative electrode slurries (the first negative electrode slurry and the second negative electrode slurry) may further include a binder if necessary. At this time, as the binder, the binder of the above-described embodiment may be used.

### (2) Forming first negative electrode active material layer on negative electrode current collector through first negative electrode slurry, and forming second negative electrode active material layer on first negative electrode actively material layer through second negative electrode slurry

The first negative electrode active material layer and the second negative electrode active material layer may be formed by the following method, but are not limited thereto.

As a first method, the first negative electrode slurry may be applied and dried on the negative electrode current collector to form the first negative electrode active material layer, and then the second negative electrode slurry may be applied and dried on the first negative electrode active material layer to form the second negative electrode active material layer. A roll-pressing process may be performed immediately after the drying of the first negative electrode slurry and immediately after the drying of the second negative electrode slurry, or may be performed only immediately after the drying of the second negative electrode slurry.

On the other hand, as a second method, the first negative electrode slurry and the second negative electrode slurry may be simultaneously applied, dried, and then roll-pressed such that the first negative electrode slurry is positioned on the negative electrode current collector and the second negative electrode slurry is positioned on the first negative electrode slurry to form the first negative electrode active material layer and the second negative electrode active material layer.

### Secondary battery

Next, a secondary battery according to another embodiment of the present invention will be described.

The secondary battery according to another embodiment of the present invention may include the negative electrode of the embodiment described above.

Specifically, the secondary battery may include the negative electrode, a positive electrode, a separator interposed between the positive electrode and the negative electrode, and an electrolyte. The negative electrode is the same as the negative electrode of the embodiment described above. Since the negative electrode has been described above, a detailed description thereof will be omitted.

The positive electrode may include a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the positive electrode current collector to improve the adhesion force of the positive electrode active material. For example, the positive electrode current collector may be used in various forms such as a film, a sheet, a foil, a net, a porous body, a foam, and a non-woven body.

The positive electrode active material may be a positive electrode active material commonly used in the art. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as Li_{1+c1}Mn_{2-c1}O₄ (0≤c1≤0.33), LiMnO₃, LiMn₂O₃, and LiMnO₂; lithium copper oxide (Li₂CuO₂); a vanadium oxide such as LiV₃O₈, V₂O₅, and Cu₂V₂O₇; a Ni-site type lithium nickel oxide represented by the formula LiNi_{1-c2}M_{c2}O₂ (wherein M is any one of Co, Mn, Al, Cu, Fe, Mg, B or Ga, and 0.01≤c2≤0.3); a lithium manganese composite oxide represented by the formula LiMn_{2-c3}M_{c3}O₂ (wherein, M is any one of Co, Ni, Fe, Cr, Zn, or Ta, and 00.01≤c3≤0.1), or by the formula Li₂Mn₃MO₈ (wherein, M is any one of Fe, Co, Ni, Cu, or Zn); LiMn₂O₄ having a part of Li in the formula substituted with an alkaline earth metal ion, and the like, but is not limited thereto. The positive electrode may be a Li-metal.

The positive electrode active material layer may include a positive electrode conductive material and a positive electrode binder, together with the positive electrode active material described above.

At this time, the positive electrode conductive material is used to impart conductivity to an electrode, and any positive electrode conductive material may be used without particular limitation as long as it has electronic conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the preparation of a lithium secondary battery, but is not limited thereto.

Specifically, the electrolyte may include a non-aqueous organic solvent and a lithium salt.

As the non-aqueous organic solvent, for example, an aprotic organic solvent, such as N-methyl-2- pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

Particularly, among the carbonate-based organic solvents, a cyclic carbonate such as ethylene carbonate and propylene carbonate may preferably be used since it is an organic solvent of high viscosity and has high dielectric constant to dissociate a lithium salt well. Such a cyclic carbonate may be more preferably used since when it is mixed with a linear carbonate of low viscosity and low dielectric constant such as dimethyl carbonate and diethyl carbonate in an appropriate ratio, an electrolyte having a high electric conductivity is prepared.

As the metal salt, a lithium salt may be used. The lithium salt is a material which is easily dissolved in the non-aqueous electrolyte solution. For example, as an anion of the lithium salt, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components.

According to yet another embodiment of the present invention, a battery module including the secondary battery as a unit cell, and a battery pack including the same are provided. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

Hereinafter, the present invention will be described in more detail with reference to specific embodiments.

### Preparation Example 1: Preparation of carbon nanotube structure dispersion solution

0.4 wt% of a single-walled carbon nanotube (TUBALL, OCSiAl Co., Ltd.) having a specific surface area of 1160 m²/g, 0.45 wt% of polyvinylpyrrolidone (K15, Zhangzhou Huafu Chemical Co., Ltd.) as a dispersant agent, 0.15 wt% of tannic acid (Sigma Aldrich Co., Ltd.) as a dispersant agent, and water as a solvent were mixed to prepare 1 kg of a mixed solution. Then, the mixed solution was treated for 30 minutes under a 10,000 rpm condition using a high-shear force in-line mixer Verso (silverson Co., Ltd.), and then sequentially passed through a primary nozzle having a diameter of 200 mm and a secondary nozzle having a diameter of 500 µm under a 1500 bar pressure condition using PICOMAX equipment (high pressure homogenizer) of Micronox Co., Ltd. Through the above, a carbon nanotube structure dispersion solution was prepared. The carbon nanotube structure dispersion solution included a carbon nanotube structure in the form in which 2 to 5,000 single-walled carbon nanotube units were coupled side by side.

### Preparation Example 2: Preparation of multi-walled carbon nanotube unit dispersion solution

4.0 parts by weight of a bundle-type carbon nanotube (specific surface area: 185 m²/g) composed of multi-walled carbon nanotube units having an average diameter of 10 nm and an average length of 1 µm and 0.6 parts by weight of carboxy methyl cellulose (weight average molecular weight: 100,000 g/mol, degree of substitution: 1.0) were mixed in 95.4 parts by weight of water, which was a dispersion medium, to prepare a mixed solution having 4.6 wt% of solids.

The mixed solution was introduced into a spike mill, 80% of which was filled with beads having a size of 0.65 mm, to be dispersed, and then discharged at a discharge speed of 2 kg/min. The above process was repeated two times to completely disperse the bundle-type carbon nanotube to prepare a multi-walled carbon nanotube unit dispersion solution. In the dispersion solution, there were 4.0 wt% of the multi-walled carbon nanotube units (average diameter: 10 nm) and 0.6 wt% of the carboxy methyl cellulose.

### Preparation Example 3: Preparation of single-walled carbon nanotube unit dispersion solution

0.4 wt% of a single-walled carbon nanotube (TUBALL, OCSiAl Co., Ltd.) having a specific surface area of 1160 m²/g, 0.45 wt% of polyvinylpyrrolidone (K15, Zhangzhou Huafu Chemical Co., Ltd.) as a dispersant agent, 0.15 wt% of tannic acid (Sigma Aldrich Co., Ltd.) as a dispersant agent, and water as a solvent were mixed to prepare 1 kg of a mixed solution. Then, the mixed solution was treated for 30 minutes under a 10,000 rpm condition using a high-shear force in-line mixer Verso (silverson Co., Ltd.), and then sequentially passed through a primary nozzle having a diameter of 200 mm and a secondary nozzle having a diameter of 500 µm under a 2000 bar pressure condition using PICOMAX equipment (high pressure homogenizer) of Micronox Co., Ltd. Through the above, a single-walled carbon nanotube unit dispersion solution including a single-walled carbon nanotube unit was prepared. In the dispersion solution, the carbon nanotube structure was not observed.

### Examples and Comparative Examples

### Example 1: Manufacturing of negative electrode

### (1) Forming of first negative electrode slurry

The carbon black dispersion solution of Preparation Example 1, artificial graphite having an average particle diameter (D₅₀) of 21 µm, natural graphite having an average particle diameter (D₅₀) of 18 µm, styrene butadiene rubber (SBR) and carboxy methyl cellulose (CMC) (weight average molecular weight: 100,000 g/mol, degree of substitution: 1.0) as binders were mixed with water to prepare a first negative electrode slurry. In the first negative electrode slurry, the weight ratio of the artificial graphite, the natural graphite, the SBR, the CMC, and the carbon black was 56.94:37.96:3.0:1.1:1.0.

### (2) Forming of second negative electrode slurry

Carbon black having an average particle diameter (D₅₀) of 5 µm or less, the carbon nanotube structure dispersion solution of Preparative Example 1, a second negative electrode active material (weight ratio of artificial graphite having an average particle diameter (D₅₀) of 21 µm : SiO having an average particle diameter (D₅₀) of 6.6 µm = 90:10), SBR and carboxy methyl cellulose (CMC) (weight average molecular weight: 100,000 g/mol, degree of substitution: 1.0) as binders were mixed with water to prepare a second negative electrode slurry. In the second negative electrode slurry, the weight ratio of the second negative electrode active material, the SBR, the CMC, the carbon nanotube structure, and the carbon black was 96.255:1.6:1.145:0.03:0.97.

### (3) Forming of first negative electrode active material layer and second negative electrode active material layer

The first negative electrode slurry and the second negative electrode slurry were simultaneously applied on a negative electrode current collector (copper (Cu) metal thin film) having a thickness of 8 µm, and the first negative electrode slurry was disposed on the negative electrode current collector, and the second negative electrode slurry was disposed on the first negative electrode slurry. Thereafter, the negative electrode current collector on which the first negative electrode slurry and the second negative electrode slurry were applied was dried at 130°C and roll-pressed to form a second negative electrode active material layer (thickness: 70.4 µm) and a first negative electrode active material layer (thickness: 74 µm).

### Comparative Example 1: Manufacturing of negative electrode

A negative electrode was manufactured in the same manner as in Example 1, except that when forming the second negative electrode active material layer of Example 1, the multi-walled carbon nanotube unit dispersion solution of Preparation Example 2 was used instead of the carbon nanotube structure of Preparation Example 1, and in the second negative electrode slurry, the weight ratio of the second negative electrode active material, the SBR, the CMC, the multi-walled carbon nanotube unit, and the carbon black was 96.2 : 1.6 : 1.2 : 0.5 : 0.5.

### Comparative Example 2: Manufacturing of negative electrode

A negative electrode was manufactured in the same manner as in Example 1, except that when forming the second negative electrode active material layer of Example 1, in the second negative electrode slurry, the weight ratio of the second negative electrode active material, the SBR, the CMC, the carbon nanotube structure, and the carbon black was adjusted to 96.296:1.6:1.104:0.00272:0.99728.

### Comparative Example 3: Manufacturing of negative electrode

A negative electrode was manufactured in the same manner as in Example 1 except that the single-walled carbon nanotube unit dispersion solution of Preparation Example 3 was used instead of the carbon nanotube structure of Preparation Example 1.

**[Table 1]**

| | Carbon nanotube structure | | Multi-walled carbon nanotube | | Single-walled carbon nanotube unit | |
|---|---|---|---|---|---|---|
| | Averag e diamet er (nm) | Average length (µm) | Average diamete r (nm) | Average length (µm) | Average diamete r (nm) | Averag e length (µm) |
| Example 1 | 12.5 | 10 | - | - | - | - |
| Compara tive Example 1 | - | - | 55 | 0.8 | - | - |
| Compara tive Example 2 | 12.5 | 10 | - | - | - | - |
| Compara tive Example 3 | - | - | - | - | 1.5 | 1 |

Table 1 above shows the average diameter and the average length of each of carbon nanotube structures, multi-walled carbon nanotubes, and single-walled carbon nanotube units present in the second negative electrode active material layer. The average diameter corresponds to an average value of diameters of top 100 carbon nanotube structures (or multi-walled carbon nanotube , or single-walled carbon nanotube units) having a larger diameter and diameters of bottom 100 carbon nanotube structures (or multi-walled carbon nanotube , or single-walled carbon nanotube units) having a smaller diameter. The average length corresponds to an average value of lengths of top 100 carbon nanotube structures (or multi-walled carbon nanotube units, or single-walled carbon nanotube units) having a larger length and lengths of bottom 100 carbon nanotube structures (or multi-walled carbon nanotube units, or single-walled carbon nanotube units) having a smaller length. The above was confirmed through an SEM.

### Experimental Example 1: Observation of negative electrode

### (1) Confirmation of presence of carbon nanotube structure

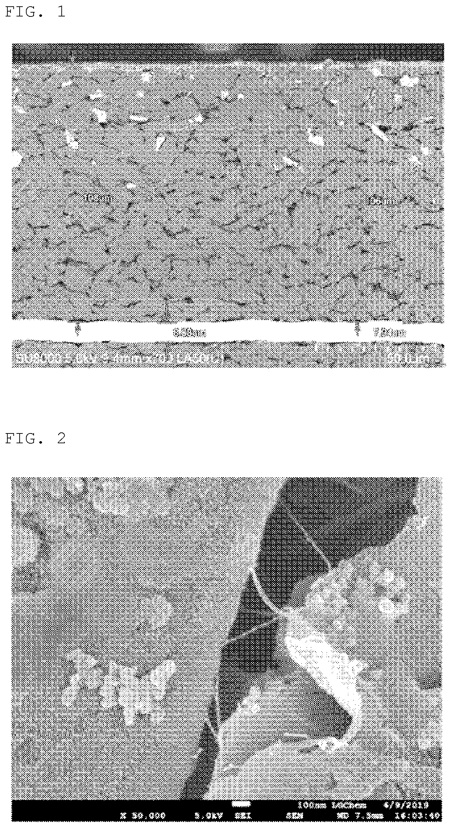

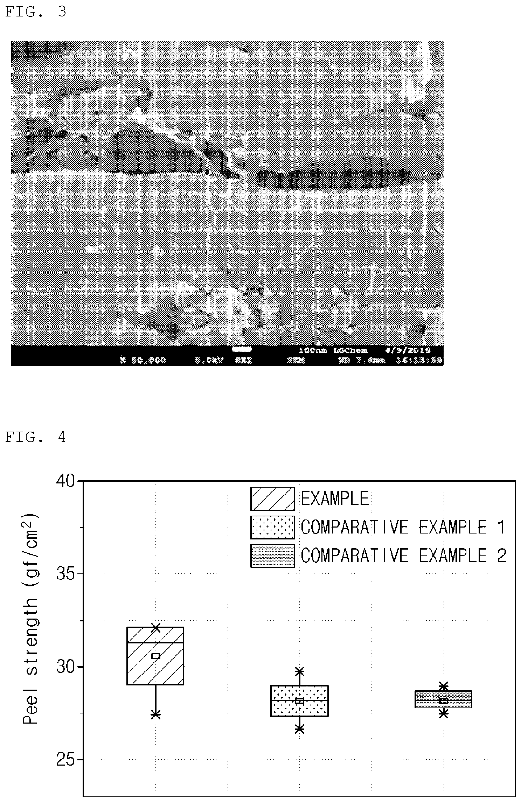

FIG. 1 and FIG. 2 are SEM photographs of a second negative electrode active material layer of the negative electrode of Example 1, and FIG. 3 is an SEM photograph of a second negative electrode active material layer of the negative electrode of Comparative Example 1.

Referring to FIG. 1, it can be seen that a second negative electrode active material layer including a silicon-based active material is present. Referring to FIG. 2, it can be seen that a carbon nanotube structure in the shape of a long rope in which a plurality of single-walled carbon nanotube units are arranged side by side and coupled to each other is present, and that silicon-based active materials are connected to each other by the carbon nanotube structure. On the other hand, in FIG. 3, only short-length multi-walled carbon nanotube units were observed, and a carbon nanotube structure was not observed, and the multi-walled carbon nanotube structures were present completely adsorbed onto the surface of artificial graphite, and did not properly serve the role connecting silicon-based active materials to each other.

### Experimental Example 2: Evaluation of negative electrode adhesion force

The negative electrode adhesion force was evaluated for the negative electrodes of Example 1 and Comparative Examples 1 and 2. The negative electrode adhesion force was measured under dry conditions. Specifically, a double-sided tape was attached to a slide glass and a negative electrode punched to 20 mm × 180 mm was placed on the slide glass, followed by rolling a 2 kg roller back and forth 10 times to adhere the negative electrode to the slide glass, and using a UTM(TA Co., Ltd.) device, the negative electrode was pulled at 200 mm/min to measure force required to peel the negative electrode off from the slide glass. At this time, the measurement angle of the slide glass and the negative electrode was 90°. The measurement results are shown in FIG. 4.

Referring to FIG. 4, it can be seen that the negative electrode adhesion force of Example 1 is higher than that of each of Comparative Examples 1 and 2.

### Experimental Example 3: Evaluation of adhesion between first negative electrode active material layer and second negative electrode active material layer

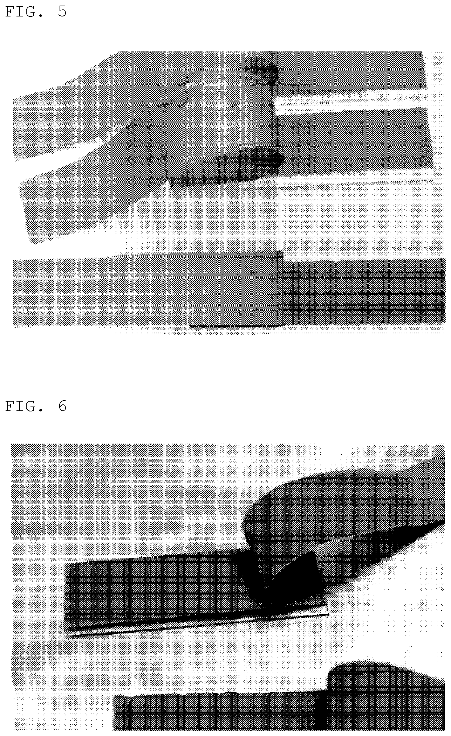

FIG. 5 are results of adhesion force test for the negative electrode of Example 1, and FIG. 6 are results of adhesion force test for the negative electrode of Comparative Example 1.

Comparing FIG. 5 and FIG. 6, in the case of the negative electrode of Example 1, the adhesion between the first negative electrode active material layer and the second negative electrode active material layer is excellent, so that the current collector and the first negative active material layer are peeled off to expose the current collector (see FIG. 5). On the other hand, in the case of the negative electrode of Comparative Example 1, the adhesion of the first negative electrode active material layer and the second negative electrode active material layer is weak, so that only the second negative electrode active material layer is peeled off (See FIG. 6).

### Experimental Example 4: Evaluation of negative electrode resistance

The resistance was evaluated for the negative electrodes of Example 1 and Comparative Example 1, and is shown in FIG. 5.

Specifically, the negative electrode resistance was set to negative electrode layer resistance and interfacial contact resistance to calculate resistance values of first and second negative electrode active material layers using a potential difference measured between each probe.

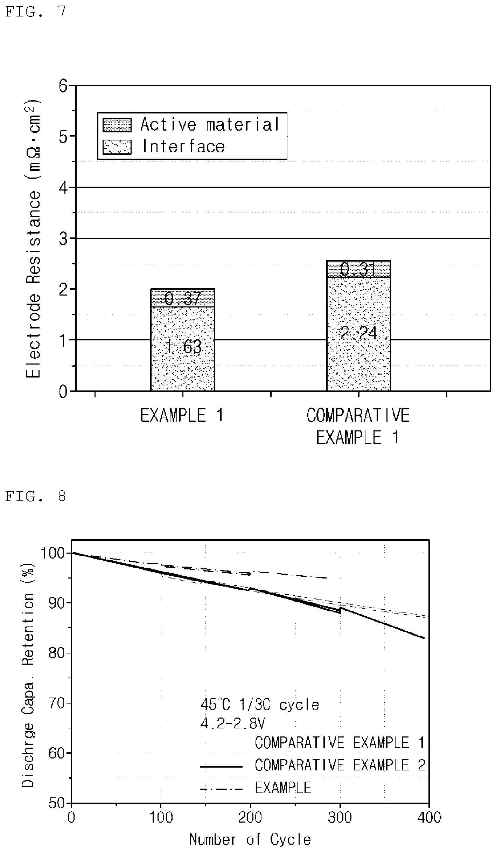

Referring to FIG. 7, it can be seen that the 'interface resistance (interface of FIG. 5) between the negative electrode active material layer and the current collector' of Example 1 is lower than that of Comparative Example 1. This may be due to the fact that the silicon-based active material may be smoothly connected by the carbon nanotube structure, and also the migration phenomenon of a negative electrode binder may be suppressed, so that the negative electrode binder may be uniformly distributed.

### Experimental Example 5: Evaluation of capacity retention rate (lifespan properties)

Using the negative electrode of each of Example 1 and Comparative Examples 1 and 2, a battery was manufactured in the following manner.

As a positive electrode active material, Li[Ni_{0.6}Mn_{0.2}Co_{0.2}]O₂ was used. The positive electrode active material, carbon black as a conductive material, and polyvinylidene fluoride (PVdF) as a biner were mixed at a weight ratio of 94:4:2 with N-methyl-2-pyrrolidone as a solvent to prepare a positive electrode slurry.

The prepared positive electrode slurry was applied and then dried on an aluminum metal thin film having a thickness of 15 µm as a positive electrode current collector. At this time, the temperature of circulated air was 110°C. Thereafter, the aluminum metal thin film on which the positive electrode slurry was applied and dried was roll-pressed, and then dried in a vacuum oven at 130°C for 2 hours to form a positive electrode active material layer.

The negative electrode of each of Example 1 and Comparative Examples 1 and 2, the manufactured positive electrode, and a porous polyethylene separator were assembled using a stacking method, and an electrolyte solution (ethylene carbonate (EC)/ethyl methyl carbonate (EMC)=1/2 (volume ratio), and lithium hexa fluoro phosphate (LiPF₆ 1 mole) were injected to the assembled battery to manufacture lithium secondary batteries.

### -Evaluation of capacity retention rate (lifespan properties)-

Each of the lithium secondary batteries were charged·discharged under the following conditions.

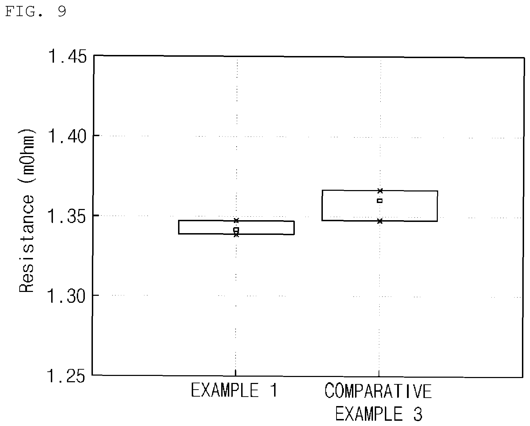

A total of 300 cycles were performed on each of the lithium secondary batteries, wherein one cycle was set to performing 0.33 C/0.33 C charging/discharging at 45°C in the voltage range of 4.2 V to 2.8 V. Thereafter, the discharge capacity (capacity retention rate) was evaluated based on 100% of the discharge capacity after one cycle and is shown in FIG. 9.

Referring to FIG. 8, it can be seen that compared to Comparative Examples 1 and 2, Example 1 has improved initial degradation and excellent long-term lifespan properties.

### Experimental Example 6: Evaluation of battery resistance

Using the negative electrode of each of Example 1 and Comparative Example 3, batteries were manufactured in the same manner as in Experimental Example 5.

Thereafter, each battery was charged SOC 50%, and then discharged under the conditions of 2.5 C and a 10-second pulse. Resistance was calculated by dividing a delta voltage value of Vi-Vf by the magnitude of a current to evaluate battery resistance, which is shown in FIG. 9.

Referring to FIG. 9, it can be seen that when the negative electrode of Example 1 including a carbon nanotube structure was used, battery resistance was lower than when the negative electrode of Comparative Example 3 including a single-walled carbon nanotube unit was used.

## Claims

1. A negative electrode comprising:
a negative electrode current collector; a first negative electrode active material layer disposed on the negative electrode current collector; and a second negative electrode active material layer disposed on the first negative electrode active material layer, wherein:
the second negative electrode active material layer includes a second negative electrode active material and a second conductive material; and
the second negative electrode active material includes a silicon-based active material and a carbon-based active material,
wherein:
the silicon-based active material includes SiOₓ (0≤X<2);
the second conductive material includes:
a carbon nanotube structure in which a plurality of single-walled carbon nanotube units are coupled side by side; and
a particulate conductive material, wherein in the second negative electrode active material layer, the weight ratio of the carbon nanotube structure and the particulate conductive material is 12.7:87.3 to 0.5:99.5.

2. The negative electrode of claim 1, wherein the carbon nanotube structure is included in the second negative electrode active material layer in an amount of an 0.005 wt% to 0.07 wt%.

3. The negative electrode of claim 1, wherein in the second negative electrode active material layer, the carbon nanotube structures are connected to each other to represent a network structure.

4. The negative electrode of claim 1, wherein in the carbon nanotube structure, the single-walled carbon nanotube units are coupled in a state in which long axes of the single-walled carbon nanotube units are arranged parallel to each other.

5. The negative electrode of claim 1, wherein the average length of the carbon nanotube structure is 3 µm to 15 µm.

6. The negative electrode of claim 1, wherein the average diameter of the carbon nanotube structure is 2 nm to 500 nm.

7. The negative electrode of claim 1, wherein in the carbon nanotube structure, the average diameter of the single-walled carbon nanotube units is 0.1 nm to 10 nm.

8. The negative electrode of claim 1, wherein the carbon nanotube structure is a carbon nanotube structure in which 2 to 50 single-walled carbon nanotube units are coupled to each other.

9. The negative electrode of claim 1, wherein the particulate conductive material comprises carbon black.

10. The negative electrode of claim 1, wherein the average particle diameter (D₅₀) of the particulate conductive material is 0.1 µm to 100 µm.

11. The negative electrode of claim 1, wherein the first negative electrode active material layer comprises a first negative electrode active material and a first conductive material, wherein the first conductive material includes at least any one selected from the group consisting of the carbon nanotube structure, a multi-walled carbon nanotube unit, graphene, and carbon black.

12. The negative electrode of claim 1, wherein the ratio of the thickness of the first negative electrode active material layer and the thickness of the second negative electrode active material layer is 1:1 to 1:2.

13. A secondary battery comprising the negative electrode of claim 1.
